# FASCICULE DE BREVET EUROPEEN

(11) **EP 2 232 687 B1**
(45) Date de publication et mention de la délivrance du brevet: **03.07.2013**
(21) Numéro de dépôt: 08872488.5
(22) Date de dépôt: 09.12.2008
(51) Int. Cl.: H02M 3/335, H02M 1/42, H02M 7/21

(54) **CONVERTISSEUR ALTERNATIF/CONTINU A ISOLEMENT GALVANIQUE**
WECHSELSTROM/GLEICHSTROMWANDLER MIT GALVANISCHER TRENNUNG
AC/DC CONVERTER WITH GALVANIC INSULATION

(30) Priorité: 19.12.2007 FR 0708909
(43) Date de publication de la demande: 29.09.2010
(73) Titulaire: SAGEM Défense Sécurité, 75015 Paris (FR)
(72) Inventeur: GUILLOT, François, 75015 Paris (FR); COURTEILLE, Jean-Marie, 75015 Paris (FR)
(74) Mandataire: Lavialle, Bruno François Stéphane
(86) Numéro de dépôt international: PCT/FR2008/001710
(87) Numéro de publication internationale: WO 2009/101300

(56) Documents cités:
- EP-A- 0 475 296
- JP-A- 6 078 542
- JP-A- 8 237 951

## Description

La présente invention concerne un convertisseur alternatif / continu à isolement galvanique utilisable par exemple sur le réseau de distribution électrique d'un aéronef.

### ARRIERE PLAN DE L'INVENTION

Dans un avion, l'énergie électrique est fournie par un alternateur entraîné par le moteur de l'avion. L'alternateur délivre une tension alternative convertie en tension continue pour être exploitée par les équipements électriques embarqués dans l'avion.

Dans sa version la plus simplifiée, la conversion est réalisée au moyen d'un transformateur comportant un enroulement primaire relié à l'alternateur et un enroulement secondaire relié à un pont redresseur associé à un condensateur de filtrage. La tension en sortie du pont redresseur est en sinusoïde double alternance tandis que le courant consommé est soumis à une forte distorsion qui provoque une baisse du rendement du transformateur et de l'alternateur, un échauffement des conducteurs et un rayonnement électromagnétique à haute fréquence source de parasites.

Un moyen pour remédier à cet inconvénient est de réaliser un filtrage en série sur le circuit primaire du transformateur. Toutefois, cette option n'est pas adaptée lorsque la fréquence de la tension alternative est variable, comme dans le cas d'un alternateur entraîné par une turbine de réacteur pour lequel la fréquence varie de 360 Hz à 800 Hz environ.

Il est également connu de recourir à un circuit de correction de facteur de puissance ou PFC (« power factor corrector ») pour réduire la distorsion en forçant le courant consommé à suivre une forme d'onde identique à celle de la tension d'entrée, à savoir une sinusoïde redressée double alternance. Il existe différentes structures de PFC.

Dans la structure de type « BOOST », le circuit ne comporte pas d'isolement galvanique obligeant à associer à ce circuit un convertisseur continu / continu assurant cette fonction. Cet ensemble présente un rendement total relativement faible, ainsi qu'un encombrement et un poids élevés.

Dans la structure de type « FLYBACK », le circuit comprend un transformateur d'isolement dont les enroulements primaire et secondaire sont de sens opposés. Le fonctionnement des circuits PFC de ce type entraîne périodiquement le stockage d'une grande quantité d'énergie dans le noyau magnétique du transformateur. Il est donc nécessaire d'utiliser de gros transformateurs pour les fortes puissances, ce qui augmente la masse et l'encombrement du circuit.

Dans la structure de type « FORWARD », le circuit comprend également un transformateur d'isolement mais dont les enroulements primaire et secondaire sont de même sens. Dans ce type de circuit, il n'est pas possible d'exploiter le courant sur la totalité de la sinusoïde obtenue et donc de consommer un courant suivant la forme d'onde de la tension d'entrée. Le document EP 475 296 divulgue un convertisseur combinant les types flylade et forward.

### OBJET DE L'INVENTION

Un but de l'invention est de proposer une structure de convertisseur ayant des performances améliorées.

### RESUME DE L'INVENTION

A cet effet, on prévoit, selon l'invention,un convertisseur alternatif / continu, comportant en entrée un circuit redresseur raccordé en série à un enroulement primaire d'un transformateur d'isolement et à un commutateur de découpage relié à un circuit de commande par modulation de largeur d'impulsion, le transformateur d'isolement comprenant un premier enroulement secondaire qui est de sens identique à l'enroulement primaire et qui est relié à une ligne de sortie du convertisseur via une diode et une bobine de filtrage, la ligne de sortie étant reliée à un condensateur de sortie, le transformateur d'isolement comprenant un deuxième enroulement secondaire qui a un sens opposé à l'enroulement primaire et qui est directement relié à la ligne de sortie via une diode.

Ainsi, pour les tensions moyennes à fortes, l'énergie est transmise vers la sortie via le premier enroulement secondaire, la diode et la bobine de filtrage. Ceci permet de faire passer de fortes puissances. En revanche, lorsque la tension est faible, l'énergie emmagasinée dans le noyau magnétique du transformateur peut être transmise, à l'ouverture du commutateur de découpage, vers le condensateur de sortie via le deuxième enroulement secondaire et la diode y raccordée. Le deuxième enroulement secondaire permet donc d'évacuer l'énergie stockée dans le noyau magnétique vers la sortie et évite donc un gaspillage d'énergie. Il permet aussi d'assurer une consommation d'énergie, utilisée par la sortie, pour les tensions faibles (partie basse amplitude de la sinusoïde). De plus, le flux résiduel présent dans le noyau à l'ouverture du commutateur de découpage excite le deuxième enroulement secondaire qui évacue l'énergie correspondante vers la sortie, minimisant ainsi l'apparition de surtensions à l'ouverture du commutateur de découpage, surtensions qui risqueraient de détériorer le commutateur de découpage. Un seul étage de conversion permet ainsi de réaliser l'isolement galvanique et une fonction PFC de manière simple, fiable et efficace grâce à un rendement relativement élevé.

Selon une caractéristique particulière, le convertisseur comprend une réserve d'énergie comprenant un troisième enroulement secondaire du transformateur d'isolement qui est de même sens que l'enroulement primaire et qui est relié d'une part à une bobine de filtrage et un condensateur d'accumulation d'énergie et d'autre part à la ligne de sortie via un commutateur de décharge piloté par un circuit de commande de décharge en fonction d'un niveau de charge du condensateur d'accumulation d'énergie.

Une réserve d'énergie est ainsi intégrée dans le circuit du convertisseur sans trop en augmenter le poids et l'encombrement, en altérant de façon minime son rendement.

D'autres caractéristiques et avantages de l'invention ressortiront à la lecture de la description qui suit d'un mode de réalisation particulier non limitatif de l'invention.

### BREVE DESCRIPTION DES DESSINS

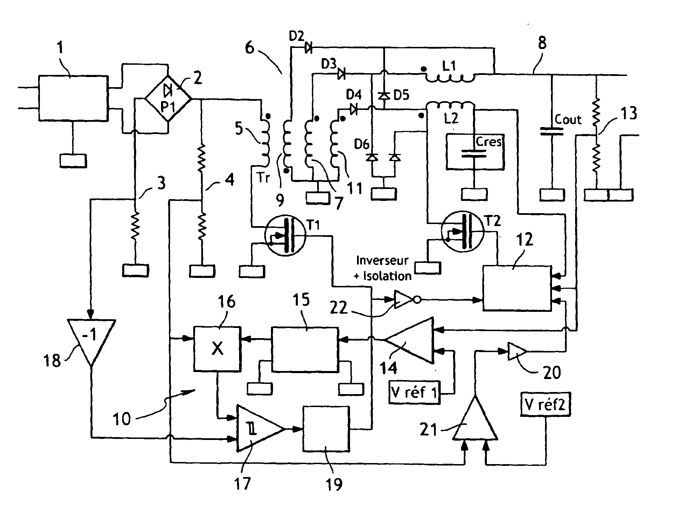

Il sera fait référence à la figure unique annexée représentant schématiquement le circuit d'un convertisseur conforme à l'invention.

### DESCRIPTION DETAILLEE DE L'INVENTION

En référence à la figure, le convertisseur conforme à l'invention est destiné à être raccordé, en entrée, à un réseau de distribution électrique de courant alternatif et, en sortie, à au moins un équipement électronique fonctionnant en courant continu.

Le convertisseur comprend en entrée un circuit de filtrage 1, connu en lui-même, relié à un circuit redresseur 2. Le circuit redresseur 2 est lui aussi connu en lui-même et formé ici d'un pont de diodes ayant des bornes d'entrée reliées au circuit de filtrage 1, une première borne de sortie reliée à un shunt de mesure 3 de courant et une deuxième borne de sortie reliée, d'une part, à un pont diviseur 4 et, d'autre part, à un enroulement primaire 5 d'un transformateur d'isolement 6 en série avec un commutateur de découpage T1. Le commutateur de découpage T1 est un transistor de puissance tel qu'un transistor à effet de champ à grille métal-oxyde ou MOSFET (de l'anglais « métal oxyde semiconductor field effect transistor ») ou un transistor bipolaire à grille isolée ou IGBT (de l'anglais « insulated gate bipolar transistor »). Le commutateur de découpage T1 est relié à un circuit de commande ou, plus précisément, circuit de commande de découpage 10 qui sera décrit ci-après.

Le transformateur d'isolement 6 possède un premier enroulement secondaire 7 qui est de sens identique à l'enroulement primaire 5 et qui est relié en série à une ligne de sortie 8 du convertisseur via une diode D3 et une bobine de filtrage (couramment appelée inductance) L1. Une diode de roue libre D6 relie la masse à la bobine de filtrage L1 de façon connue en soi pour assurer la continuité du courant lorsque la diode D3 ne conduit pas (restitution de l'énergie par la bobine de filtrage L1).

Le transformateur d'isolement 6 possède un deuxième enroulement secondaire 9 qui a un sens opposé à l'enroulement primaire 5 et qui est relié via une diode D2 directement à la ligne de sortie 8, c'est-à-dire en aval le la bobine L1.

Le transformateur d'isolement 6 possède un troisième enroulement secondaire 11 qui est de même sens que l'enroulement primaire 5 et qui est relié via une diode D4 :
- à la ligne de sortie 8,
- à une bobine de filtrage L2 qui est couplée à la bobine de filtrage L1 et qui est en série avec un condensateur d'accumulation d'énergie Crés,
- à un commutateur de décharge T2 piloté par un circuit de commande de décharge 12 en fonction d'un niveau de charge du condensateur d'accumulation d'énergie Cres.

Le condensateur d'accumulation d'énergie Crés est un supercondensateur de très forte capacité, de l'ordre de quelques centaines de farads. La capacité et le nombre de condensateurs d'accumulation d'énergie sont déterminés en fonction de la quantité d'énergie dont on souhaite disposer en cas d'interruption de l'alimentation.

Le commutateur de décharge T2 est du même type que le commutateur de découpage T1.

A la ligne de sortie 8, sont en outre reliés un condensateur de sortie Cout et un pont diviseur 13.

Le circuit de commande de découpage 10 est un circuit de commande par modulation de largeur d'impulsion agencé pour commander le commutateur de découpage T1 en fonction d'une comparaison d'une tension image d'un courant consommé en entrée du convertisseur avec un signal en forme de sinusoïde redressée double alternance ayant une amplitude dépendant d'une tension d'erreur entre une tension de sortie du convertisseur et une tension de référence.

Le circuit de commande de découpage 10 comprend un comparateur 14 ayant une entrée reliée au pont diviseur 13 relié à la ligne de sortie 8 et une entrée reliée à une source de tension de référence Vréf1. Le comparateur 14 a une sortie reliée via un organe d'isolement 15 (ici un coupleur opto-électronique) à une première entrée d'un multiplieur 16 ayant une deuxième entrée reliée au pont diviseur 4. Le multiplieur 16 a une sortie reliée à une première entrée d'un comparateur à hystérésis 17 ayant une deuxième entrée reliée au shunt de mesure 3 via un inverseur 18 pour recevoir une tension image du courant consommé et une sortie reliée via une temporisation 19 à une entrée de commande (la grille) du commutateur de découpage T1.

Le circuit de commande de décharge 12 possède :
- une entrée reliée via un inverseur 20 à une sortie d'un comparateur 21 ayant une première entrée reliée au pont diviseur 4 pour recevoir une tension représentative de la tension de sortie du circuit redresseur 2 et une deuxième entrée reliée à une source de tension de référence Vréf2 pour fournir au circuit de commande de décharge 12 une tension d'erreur entre une la tension présente en sortie du circuit redresseur 12 et la tension de référence Vréf2 (le but étant de détecter la disparition du réseau d'alimentation),
- une entrée reliée à la bobine de filtrage L2 et au condensateur d'accumulation d'énergie Crés (pour la mesure de la tension de réserve),
- une entrée reliée au pont diviseur 13 (pour la mesure de la tension de sortie),
- une entrée reliée via un organe d'inversion et d'isolement 22 (un inverseur associé à un coupleur opto-électronique) à la sortie de la temporisation 19 (pour interdire la commande du commutateur de décharge T2 quand le commutateur de découpage T1 est passant),
- une sortie reliée à l'entrée de commande (la grille) du commutateur de décharge T2.

Le fonctionnement du convertisseur conforme à l'invention va maintenant être décrit.

Dans l'exemple décrit, le transformateur d'isolement 6 a un rapport de transformation de 1,5.

Le principe du convertisseur consiste à commander en modulation de largeur d'impulsion le commutateur de découpage T1 de manière à forcer le courant consommé à suivre une forme d'onde identique à celle de la tension à savoir une sinusoïde redressée double alternance.

Pour ce faire, le signal issu du pont diviseur 4, représentatif de la tension en sortie du circuit redresseur 2 (sinusoïde redressée double alternance), est multiplié par le multiplieur 16 à un signal représentatif d'une tension d'erreur résultant de la comparaison par le comparateur 14 de la tension en sortie du pont diviseur 13 et de la tension de référence Vréf1. Le produit de ces signaux est un signal en forme de sinusoïde redressé double alternance dont l'amplitude dépend de l'erreur sur la tension de sortie.

Ce signal est comparé, avec un hystérésis, par le comparateur à hystérésis 17 à une tension image du courant consommé captée au niveau du shunt de mesure 3. Le signal sortant du comparateur à hystérésis 17 alimente après temporisation la grille du commutateur de découpage T1.

Ainsi, quand le courant est plus faible que la tension d'erreur, le commutateur de décharge T1 est passant tandis que lorsque le courant est plus fort que la tension d'erreur, le commutateur de découpage T1 est bloqué.

A l'ouverture du commutateur de découpage T1, lorsque la tension est faible (tension de sortie inférieure à un seuil égal au produit de la tension d'entrée et du rapport de transformation, soit 1,5), l'énergie stockée dans le noyau magnétique du transformateur d'isolement 6 excite le deuxième enroulement secondaire 9 et est transmise vers la ligne de sortie 8 à travers la diode D2. Le fonctionnement du convertisseur s'apparente alors à celui d'un convertisseur du type FLYBACK, permettant d'assurer une consommation d'énergie, utilisée par la sortie, pendant les phases de basse amplitude de la tension sinusoïdale redressée.

Lorsque la tension de sortie a augmenté jusqu'à atteindre un seuil égal au produit de la tension d'entrée et du rapport de transformation, la diode D3 conduit et l'énergie du noyau magnétique est transférée vers la ligne de sortie par le premier enroulement 7, la diode D3 et la bobine de filtrage L1. Le fonctionnement du convertisseur s'apparente alors à celui d'un convertisseur de type FORWARD. Le convertisseur a également alors un mode minoritaire de fonctionnement de type FLYBACK qui contribue à la décharge complète du noyau magnétique du transformateur d'isolement.

On est donc en présence d'un système auto-oscillant asservi sur l'amplitude de la tension d'erreur elle-même en forme de sinusoïde redressé double alternance, permettant d'obtenir une tension de sortie précise et un courant consommé sinusoïdal.

Le condensateur d'accumulation d'énergie Crès est chargé (lorsque le convertisseur a un mode de fonctionnement de type FORWARD) par l'intermédiaire du troisième enroulement secondaire 11 et de la diode D4. Les bobines de filtrage L1 et L2, couplées, assurent une limitation des pics de courant de charge et une régulation approximative de la tension de charge.

Une disparition de la tension d'alimentation est détectée par le circuit de commande de décharge 12 qui pilote le commutateur de décharge T2 en modulation de largeur d'impulsion. L'ensemble bobine de filtrage L2 et condensateur d'accumulation d'énergie Crés fonctionne alors en élévateur de tension avec une valeur résultante asservie à la valeur de consigne de fonctionnement normal d'utilisation. Le circuit de commande de décharge 12 est agencé pour ajuster le rapport cyclique de sa commande au niveau de charge du condensateur d'accumulation d'énergie Crés.

En particulier, la réserve d'énergie est facultative.

## Revendications

1. Convertisseur alternatif / continu, comportant en entrée un circuit redresseur (2) raccordé en série à un enroulement primaire (5) d'un transformateur d'isolement (6) et à un commutateur de découpage (T1) relié à un circuit de commande (10) par modulation de largeur d'impulsion, le transformateur d'isolement comprenant un premier enroulement secondaire (7) qui est de sens identique à l'enroulement primaire et qui est relié à une ligne de sortie (8) du convertisseur via une diode (D3) et une bobine de filtrage (L1), la ligne de sortie étant reliée à un condensateur de sortie (Cout), **caractérisé en ce que** le transformateur d'isolement comprend un deuxième enroulement secondaire (9) qui a un sens opposé à l'enroulement primaire et qui est relié directement à la ligne de sortie (8) via une diode (D2).

2. Convertisseur selon la revendication 1, dans lequel le circuit de commande (10) est agencé pour commander le commutateur de découpage (T1) en fonction d'une comparaison d'une tension image d'un courant consommé en entrée du convertisseur avec un signal en forme de sinusoïde redressée double alternance ayant une amplitude dépendant d'une tension d'erreur (14) entre une tension de sortie (13) du convertisseur et une tension de référence (Vréf1).

3. Convertisseur selon la revendication 2, dans lequel le circuit de commande (10) du commutateur de découpage (T1) comprend un comparateur (14) ayant des entrées reliées à la ligne de sortie (8) et à une source de tension de référence (Vréf1) et une sortie reliée à une première entrée d'un multiplieur (16) ayant une deuxième entrée recevant une tension de sortie du circuit redresseur (2) et une sortie reliée à une première entrée d'un comparateur à hystérésis (17) ayant une deuxième entrée recevant une tension image du courant consommé et une sortie reliée via une temporisation (19) à une entrée de commande du commutateur de découpage.

4. Convertisseur selon la revendication 1, comprenant une réserve d'énergie comprenant un troisième enroulement secondaire (11) du transformateur d'isolement (6) qui est de même sens que l'enroulement primaire (5) et qui est relié d'une part à une bobine de filtrage (L2) et un condensateur d'accumulation d'énergie (Crés) et d'autre part à la ligne de sortie (8) via un commutateur de puissance (T2) piloté par un circuit de commande de décharge (12) en fonction d'un niveau de charge du condensateur d'accumulation d'énergie (Cres).

5. Convertisseur selon la revendication 4 prise en dépendance de la revendication 3, comprenant un comparateur (21) ayant une première entrée recevant une tension de sortie du circuit redresseur (2) et une deuxième entrée reliée à une source de tension de référence (Vréf2) et une sortie reliée au circuit de commande de décharge (12).

6. Convertisseur selon la revendication 5, dans lequel le circuit de décharge (12) possède en outre :
- une entrée reliée à la bobine de filtrage (L2) et au condensateur d'accumulation d'énergie (Crés),
- une entrée reliée à la ligne de sortie (8),
- une entrée reliée via un organe d'inversion et d'isolement (22) à la sortie de la temporisation (19),
- une sortie reliée à l'entrée de commande du commutateur de puissance (T2).

7. Convertisseur selon la revendication 1, comprenant un circuit de filtrage (1) en amont du circuit redresseur (2).

## Patentansprüche

1. Wechselstrom-/Gleichstromwandler, umfassend als Eingang eine Gleichrichterschaltung (2), die in Serie mit einer Primärwicklung (5) eines Isolationstransforlnators (6) und einem Trennschalter (T1) verbunden ist, der an einen Steuerkreis (10) zur Steuerung durch Pulsbreitenmodulation angeschlossen ist, wobei der Isolationstransformator eine erste Sekundärwicklung (7) umfasst, bei der die Wicklungsrichtung mit der jener Primärwicklung identisch ist, und die über eine Diode (D3) und eine Filterspule (L1) mit einer Ausgangsleitung (8) des Wandlers verbunden ist, wobei die Ausgangsleitung mit einem Ausgangskondensator (Cₒᵤₜ) verbunden ist, **dadurch gekennzeichnet, dass** der Isolationstransformator eine zweite Sekundärwicklung (9) umfasst, bei der die Wicklungsrichtung entgegengesetzt zu jener der Primärwicklung ist, und die direkt über eine Diode (D2) mit der Ausgangsleitung (8) verbunden ist.

2. Wandler nach Anspruch 1, bei dem der Steuerkreis (10) ausgebildet ist, um den Trennschalter (T1) in Abhängigkeit eines Vergleichs einer einen Verbrauchsstrom am Eingang des Wandlers abbildenden Spannung mit einem Signal in Form einer zweiweggleichgerichteten Sinuskurve zu steuern, deren Amplitude von einer Fehlerspannung (14) zwischen einer Ausgangsspannung (13) des Wandlers und einer Referenzspannung (Vref1) abhängt.

3. Wandler nach Anspruch 2, bei dem der Steuerkreis (10) des Trennschalters (T1) einen Komparator (14) mit Eingängen, die mit der Ausgangsleitung (8) und einer Referenzspannungsquelle (Vréf1) verbunden sind, sowie mit einem Ausgang umfasst, der mit einem ersten Eingang eines Verstärkers (16) verbunden ist, der einen zweiten Eingang zum Aufnehmen einer Ausgangsspannung der Gleichrichterschaltung (2) und einen Ausgang aufweist, der mit einem ersten Eingang eines Hysteresekomparators (17) verbunden ist, der einen zweiten Eingang zur Aufnahme einer den verbrauchten Strom abbildenden Spannung und einen Ausgang aufweist, der über ein Verzögerungsglied (19) mit einem Steuer-Eingang des Trennschalters verbunden ist.

4. Wandler nach Anspruch 1, umfassend eine Energiereserve, die eine dritte Sekundärwicklung (11) des Isolationstransformators (6) umfasst, die die gleiche Wicklungsrichtung wie die Primärwicklung (5) aufweist, und die einerseits mit einer Filterspule (L2) und einem Kondensator zur Energiespeicherung (C_{rés}) verbunden ist, und andererseits mit der Ausgangsleitung (8) über einen Leistungsschalter (T2) verbunden ist, der durch einen Entladungs-Steuerkreis (12) gesteuert wird in Abhängigkeit eines Ladungsniveaus des Kondensators für die Energiespeicherung (C_{rés}).

5. Wandler nach Anspruch 4 in Abhängigkeit von Anspruch 3, umfassend einen Komparator (21) mit einem ersten Eingang, der eine Ausgangsspannung der Gleichrichterschaltung (2) aufnimmt, und einem zweiten Eingang, der mit einer Referenzspannungsquelle (Vref2) verbunden ist, sowie einem mit dem Entladungs-Steuerkreis (12) verbundenen Ausgang.

6. Wandler nach Anspruch 5, bei dem der Entladungs-Stromkreis (12) des Weiteren folgendes aufweist:
- einen Eingang, der mit der Filterspule (L2) und dem Kondensator für die Energiespeicherung (C_{rés}) verbunden ist,
- einen Eingang, der mit der Ausgangsleitung (8) verbunden ist,
- einen Eingang, der über ein Inversions- und Isolierungsorgan (22) mit dem Ausgang des Verzögerungsgliedes (19) verbunden ist,
- einen Ausgang, der mit dem Steuer-Eingang des Leistungsschalters (T2) verbunden ist.

7. Wandler nach Anspruch 1, umfassend eine Filterschaltung (1) stromaufwärts der Gleichrichterschaltung (2).

## Claims

1. An AC/DC converter comprising at its input a rectifier circuit (2) connected in series with a primary winding (5) of an isolating transformer (6) and with a chopper switch (T1) connected to a pulse width modulation control circuit (10), the isolating transformer having a first secondary winding (7) wound in the same direction as the primary winding and connected to an output line (8) of the converter via a diode (D3) and a filter coil (L1), the output line being connected to an output capacitor (Cₒᵤₜ), the converter being **characterized in that** the isolating transformer has a second secondary winding (9) that is wound in the opposite direction to the primary winding and that is connected directly to the output line (8) via a diode (D2).

2. A converter according to claim 1, wherein the control circuit (10) is arranged to control the chopper switch (T1) as a function of a comparison between a voltage that is the image of current consumed at the input of the converter and a signal in the form of a fullwave rectified sinewave of amplitude that depends on an error voltage (14) between an output voltage (13) of the converter and a reference voltage (Vref1).

3. A converter according to claim 2, wherein the control circuit (10) of the chopper switch (T1) includes a comparator (14) having inputs connected to the output line (8) and to a source of a reference voltage (Vref1), and an output connected to a first input of a multiplier (16) having a second input receiving an output voltage from the rectifier circuit (2), and an output connected to a first input of a hysteresis comparator (17) having a second input receiving a voltage that is an image of the current consumed, and an output connected via a time delay (19) to a control input of the chopper switch.

4. A converter according to claim 1, including a reserve supply of energy comprising a third secondary winding (11) of the isolating transformer (6) that is wound in the same direction as the primary winding (5) and that is connected firstly to a filter coil (L2) and an energy storage capacitor (Cᵣₑₛ), and secondly to the output line (8) via a power switch (T2) controlled by a discharge control circuit (12) as a function of a level of charge in the energy storage capacitor (Cᵣₑₛ)·

5. A converter according to claim 4 as dependent on claim 3, including a comparator (21) having a first input receiving an output voltage of the rectifier circuit (2) and a second input connected to a source of a reference voltage (Vref2), and an output connected to the discharge control circuit (12).

6. A converter according to claim 5, wherein the discharge circuit (12) further possesses:
• an input connected to the filter coil (L2) and to the energy storage comparator (Cᵣₑₛ);
• an input connected to the output line (8);
• an input connected via an inverter and isolating member (22) to the output of the time delay (19); and
• an output connected to the control input of the power switch (T2).

7. A converter according to claim 1, including a filter circuit (1) upstream from the rectifier circuit (2).
